# EUROPEAN PATENT APPLICATION

(11) **EP 4 755 624 A1**
(43) Date of publication of application: **10.06.2026**
(21) Application number: 25219518.5
(22) Date of filing: 28.11.2025
(51) Int. Cl.: B32B 7/06, B32B 7/12, B32B 27/08, B32B 27/10, B32B 27/30, B32B 27/32

(54) **DELAMINABLE LAMINATED PACKAGING MATERIAL, PACKAGING CONTAINER COMPRISING THE LAMINATED PACKAGING MATERIAL, AND METHODS OF MAKING AND RECYCLING THE MATERIAL AND CONTAINER**

(30) Priority: 04.12.2024 EP 24217580
(71) Applicant: Tetra Laval Holdings & Finance S.A., 1009 Pully (CH)
(72) Inventor: ÖHMAN, Peter, 221 86 Lund (SE); BERLIN, Mikael, 221 86 Lund (SE)
(74) Representative: Tetra Pak Patent Attorneys

(57) **Abstract**

A delaminable laminated packaging material (10) for packaging of liquid or semi-liquid food products comprises as layers of a layer sequence:
- an outermost protective material layer (16);
- a bulk layer (11) of paper or paperboard or other cellulose-based material;
- a releasable adhesive coating (12) comprising a water-dispersible polymer selected from ethylene-vinyl acetate copolymer, acrylic copolymer, styrene-butadiene copolymer and ethylene-vinyl alcohol copolymer coated onto the inner surface of the bulk layer (11);
- a gas barrier layer (14) comprising a barrier substrate (14a) and a barrier material layer (14b), or comprising a gas barrier polymer, the gas barrier layer being bonded to the releasable adhesive coating (12); and
- an innermost liquid-tight material layer (19), which is optionally comprised in the barrier substrate (14a).

A packaging container comprising the material and methods of making and recycling the material and container are also described.

## Description

### Technical field

The present invention relates to a delaminable laminated packaging material (also referred to herein as a "packaging laminate") comprising a gas barrier layer, in particular intended for liquid carton food packaging, to a method of making such a laminated packaging material, to a packaging container comprising the laminated packaging material, to a method of making such a packaging container and to a method of recycling the laminated packaging material or container.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium (Al) foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer. As mentioned above, these layers are also liquid-tight.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally cuboid shape, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced in bacteria and the filled packaging container is produced under clean conditions such that the filled package may be stored for a long time even at ambient temperature, without the risk of growth of micro-organisms in the filled product. Another important advantage of the Tetra Brik^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A packaging laminate of the above-described type is conventionally produced by a process in which a web of paper or paperboard is united with a prefabricated web of aluminium which, with good adhesive strength, is bonded to the paper or paperboard web, with the aid of a thermoplastic bonding layer (adhesive or binder) which is extruded between the webs. The webs are thereafter coated with thin layers of polyethylene which are extruded on both sides of the webs for the formation of the outer, liquid-tight plastic layers of the packaging laminate.

By such means, the packaging laminate can be given good integrity and internal adhesive or bonding strength, which is a vital precondition to be able to produce a mechanically strong and configurationally stable package from the packaging laminate. Typically internal bonding strength is at least 60 N/m, such as at least 100 N/m, as discussed in WO2017/089506 of the applicant.

In recent years, the majority of the producers of food packaging containers are focusing on reaching recyclability and sustainability standards promoted by various governments and other institutions, such as the European Union. The objective of these efforts is to deliver a future carton-based packaging container, made to a larger extent of renewable packaging materials, and being to a higher degree recyclable, in order to reduce waste and pollution.

A layer of an aluminium foil in the packaging laminate provides gas barrier properties quite superior to most other gas barrier materials. The conventional aluminium foil based packaging laminate for liquid food aseptic packaging is still the most cost-efficient packaging material, at its level of performance, available on the market today.

However, there is a need to provide alternative barrier materials to aluminium foil to reduce the carbon footprint further. Aluminium foil barriers for liquid carton food packaging are normally from 5 to 9 µm in thickness, such as most commonly about 6 µm.

Any other material to compete with the foil-based materials should be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is a general incentive towards developing pre-manufactured films or sheets having high barrier properties, or towards combining several separate barrier materials in a multilayer film or sheet. Such films or sheets would replace the aluminium-foil barrier material in the conventional laminated packaging material and may further be adapted to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings. Such coatings are applied on substrates which do not typically provide significant barrier properties themselves. The thickness of a dispersion-coated polymer is around 1 to 2 µm, while vapour-deposited barrier coatings are as thin as below 0.5 µm, such as from 10 to 100 nm, such as from 15 to 80 nm, such as from 20 to 50 nm. Various such coatings have been developed for many years and have been combined in multilayer packaging material structures in search for an improved total performance. Typical materials for vapour-deposited barrier coatings are aluminium, aluminium oxide and silicon oxide. Such gas barrier layers are discussed for example in WO2013/041469 and WO2023/186448 of the applicant.

Recycling is also an important consideration. While good integrity and internal adhesive or bonding strength of the packaging laminate are both desirable and necessary to be able to produce packages possessing superior mechanical strength and configurational stability, these are also important factors when it comes to being able to recycle the individual materials in the used packaging laminate as far as is possible, and being able, by recovering and recycling them in as pure form as possible, to re-use these individual materials. For example, there has long been a need in this art to be able to recycle the fibre content of the packaging laminate (its paper or paperboard fraction), but because of the powerful adhesive bond between the paper or paperboard layer and the adjacent layers, it has proved difficult to separate these layers from one another without a significant loss of fibres which adhere to the plastic after the separation treatment.

WO97/16312 of the applicant discloses a delaminable packaging material wherein paper is adhered to adjacent layers via a water-soluble polymer such as starch or polyvinyl alcohol.

US5587204 of International Paper Company discloses a recyclable paperboard composite wherein a paperboard substrate is coated with a highly alcoholised polyvinyl alcohol binding layer and a polyethylene polymeric layer is bound to the polyvinyl alcohol layer.

JP2022073824 of Sumimoto discloses a delaminable packaging material comprising a paper part and a laminate part and having a release layer on a face of the paper. The release layer is of butenediol vinyl alcohol copolymer or polyvinyl alcohol.

JP2000128144 of Dai Nippon Printing Co., Ltd. discloses a delaminable packaging material comprising a paper layer and a gas barrier layer joined by hot-melt extrusion of an intermediate bonding layer of LDPE or an adhesive resin layer of ethylene methyl methacrylate or other acrylic polymer.

JP2000203564 of Dai Nippon Printing Co., Ltd. discloses a delaminable packaging material comprising a paper layer and a gas barrier layer joined by two release layers e.g. of polyester or urethane resin and ethylene-vinyl acetate copolymer respectively. The release layers are printed onto the gas barrier layer and adhered to the paper layer via extrusion lamination of an adhesive resin layer.

WO2021/164913 of Constantia Pirk GmbH & Co. KG discloses a recyclable paper packaging laminate consisting of a paper layer with a barrier film connected thereto via a hydrophilic adhesive layer, the side of the paper layer facing the barrier film being uncoated.

There remains a need to realise a packaging laminate which, despite good integrity and good internal cohesion between the individual layers of the packaging laminate, is easy to delaminate by hand and therefore easy to sort for recycling and re-use without excessive material losses. Premature delamination e.g. in the filling machine should be avoided, on the other hand. The fibre content (the paper or paperboard) and the polymer content of the packaging laminate should be available for reuse in as pure a form as possible.

### Summary of the invention

In a first aspect, the invention relates to a delaminable laminated packaging material for packaging of liquid or semi-liquid food products, comprising as layers of a layer sequence:
- an outermost protective material layer;
- a bulk layer of paper or paperboard or other cellulose-based material;
- a releasable adhesive coating comprising a water-dispersible polymer selected from ethylene-vinyl acetate copolymer, acrylic copolymer, styrene-butadiene copolymer and ethylene-vinyl alcohol copolymer coated onto the inner surface of the bulk layer;
- a gas barrier layer comprising a barrier substrate and a barrier material layer, or comprising a gas barrier polymer, the gas barrier layer being bonded to the releasable adhesive coating; and
- an innermost liquid-tight material layer, which is optionally comprised in the barrier substrate, or which is optionally the barrier substrate.

It will be appreciated that adhesion within and between other layers of the laminated packaging material must be significantly higher, e.g. above 100 N/m, to avoid delamination in the wrong layer. This includes the bulk layer Z-strength (i.e. strength perpendicular to the plane of the bulk layer).

In a preferred embodiment, the gas barrier layer comprises a barrier substrate and a barrier material layer and the adhesive strength of the releasable adhesive coating to the gas barrier layer is 10 to 20 N/m, preferably 15 to 20 N/m.

The laminated packaging material may comprise at least one laminated opening hole in which a hole in the bulk layer is covered by the other layers of the laminated packaging material.

Preferably, the laminated packaging material provides oxygen barrier properties and water vapour barrier properties.

Preferably, the oxygen transmission rate of the laminated packaging material at 21 % O₂/23 °C/50% RH as measured by ASTM D3985:2017 and F1927:2020 is 10 cm³/(m²·24h) or less, e.g. 1.0 cm³/(m²·24h) or less, such as 0.5 cm³/(m²·24h) or less, more preferably 0.4 cm³/(m²·24h) or less, most preferably 0.3 cm³/(m²·24h) or less.

In a second aspect, the invention relates to a method of making a delaminable laminated packaging material as described above for packaging of liquid or semi-liquid food products, the delaminable laminated packaging material comprising the specified layers and the method comprising the steps of:
- laminating the releasable adhesive coating of the bulk layer to the gas barrier layer by means of heat pressure lamination; and
- applying the outermost and optionally innermost layers.

In a third aspect of the invention there is provided a packaging container comprising the laminated packaging material described above.

According to an embodiment, the packaging container is manufactured at least partly from the laminated packaging material of the invention, and according to a further embodiment it is made in its entirety of the laminated packaging material.

In a fourth aspect of the invention there is provided a method of making the packaging container.

In a fifth aspect there is provided a method of recycling the packaging material or container, comprising repulping of the laminated packaging material or a portion thereof.

All features described in connection with any aspect of the invention can be used with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures, and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to their adjacent layers, as well as the quality of the individual material layers. Regarding the sealing of the packages, the integrity is mainly focussed on the quality of the sealing joints.

The term "liquid or semi-liquid food" generally refers to food products having a flowing content, i.e. including food products having a high viscosity, like sauces, pastes and soups, and such food products that optionally may contain pieces of food. Dairy and milk, soy-, rice-, grain- and seed- drinks or liquids, juice, nectar, still drinks, energy drinks, sport drinks, coffee or tea drinks, coconut water, wine, soups, crushed tomatoes, sauce (such as pasta sauce) and olive oil are some non-limiting example of food products contemplated.

The term "aseptic" in connection with a packaging material and packaging container refers to conditions where microorganisms are eliminated, inactivated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

By the term "bulk layer" is normally meant the thickest layer or the layer containing the most material in a multilayer laminate, i.e. the layer which contributes most to the mechanical properties and the dimensional stability of the laminate and of packaging containers folded from the laminate, such as paperboard or carton.

The term "outer layers" is used herein to refer to layers on the outer side of the releasable adhesive coating (including the bulk layer and outermost layer, and typically at least part of the releasable adhesive coating), and the term "inner layers" is used to refer to layers on the inner side of the releasable adhesive coating (including the gas barrier layer and innermost layer, and possibly residue of the releasable adhesive coating).

The term "polyethylene" (PE) refers to a polymer comprising ethylene monomers at from about 90 to 100 mol%.

The term "polypropylene" (PP) refers to a homopolymer or co-polymer of PP, e.g. a polymer comprising propylene monomers at from about 90 to 100 mol%.

Low density polyethylene (LDPE) has a density of 917 to 930 kg/m³. It is typically polymerised from ethylene monomers alone and has a branched polymer chain structure (on about 2 % of the carbon atoms), such that its molecules are less tightly packed and less crystalline, and therefore its density is lower than for linear polyethylenes, such as linear low density polyethylene (LLDPE) or high density polyethylene (HDPE).

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional LDPE because of the absence of long chain branching. LLDPE polymer typically has a narrower molecular weight distribution than conventional LDPE (this is true for m-LLDPE especially) and significantly different rheological properties.

High density polyethylene, HDPE, has a density of 930 to 970 kg/m³. Up to 2 mol% comonomer content is typical. The lack of branching is ensured by an appropriate choice of catalyst (e.g. ZN catalysts) and reaction conditions.

The term "ethylene vinyl acetate copolymer" (also referred to as "EVA", "EVAc" and "PEVA") refers to a copolymer of ethylene and vinyl acetate.

The term "dispersion coating" (also called "liquid-film coating") herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. The aqueous dispersion may comprise fine polymer particles in suspension or emulsion, and thus be a latex. The term "water-dispersible" includes polymers which are capable of forming aqueous dispersions, and which preferably form coatings which are redispersible in water.

Adhesive strength (also referred to herein as "peeling strength") is measured according to ASTM D903-98 at 180°, using a 15 mm wide strip and a speed of 50 mm/min. Peeling is conducted on the inner layers, with the outer layers being held.

The term "delaminable" includes laminated packaging materials which are separable into the inner layers and outer layers (as defined above) by hand.

"Repulping" refers to mechanical treatment of material in water to provide a pulp comprising fibre content and water, and optionally a coarse reject fraction of non-fibre material.

"Fibre yield" refers to the wt% of the bulk layer which is recovered as fibre content in pulp.

### Bulk Layer

A paper or paperboard bulk layer for use in the invention usually has a thickness of from about 100 µm up to about 600 µm, and a surface weight of approximately 100 to 500 g/m² (gsm), preferably about 200 to 300 g/m², and may be a conventional paper or paperboard of suitable packaging quality. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. For larger packages a paperboard of 400 to 500 µm is preferred. For portion packs of 150 to 350 mL size, a bending stiffness of 80 mN is preferred.

The inner surface of the bulk layer is coated in use with the releasable adhesive coating. Preferably, the surface is fibrous with no previous coating (e.g. clay coating). However, a previous coating may be applied. The outer surface may be clay-coated, and this may assist with delamination of the outermost layer.

### Releasable Adhesive Coating

The releasable adhesive coating comprises a water-dispersible polymer selected from ethylene-vinyl acetate copolymer, acrylic copolymer, styrene-butadiene copolymer and ethylene-vinyl alcohol copolymer.

Ethylene-vinyl acetate copolymer is preferred. Preferably, the releasable adhesive coating comprises a majority of EVAc copolymer, and more preferably it essentially comprises EVAc copolymer. In a preferred embodiment, the releasable adhesive coating consists of EVAc copolymer.

Preferably, the ethylene comonomer content of the EVAc copolymer is 35 to 65 mol%, more preferably 45 to 65 mol%.

Suitable acrylic copolymers including ethylene-acrylic copolymers such as ethylene (meth)acrylic acid copolymer and ethylene (meth)acrylate copolymer, as well as styrene-acrylic copolymers.

Where ethylene-vinyl alcohol copolymer (EVOH) is used, preferably it only contains a few mol% of ethylene monomer, e.g. Exceval^{™} aqueous dispersion coatable EVOH, such as Exceval^{™} HR3010, from Kuraray. EVOH will make a contribution to the oxygen gas barrier properties of the laminate. EVOH exhibits similar properties to EVAc when used as heat activatable adhesives. Thus, preferably, the releasable adhesive coating comprises a water-dispersible polymer selected from ethylene-vinyl acetate copolymer and ethylene-vinyl alcohol copolymer. Preferably, the releasable adhesive coating is present in an amount of 0.5 to 3 g/m², such as 1 to 3 g/m², preferably 0.5 to 2.5 g/m² e.g. 1 g/m² or 2 g/m² dry weight. Below 0.5 or 1 g/m² there may be insufficient coverage of the bulk layer surface. Above 3 g/m² coverage is not significantly improved, and costs are increased.

Preferably, the water-dispersible polymer is dispersion coated. It is suitably applied in aqueous form, e.g. in the form of an aqueous emulsion or latex. Suitably, the solids content is 35 to 65 wt%, preferably 40 to 60 wt%, e.g. 55 wt% solids content. An emulsifier such as polyvinyl alcohol (PVOH) may be present to stabilise the emulsion.

A preferred grade of EVAc is Aquence BG 9031 from Henkel, Germany.

### Gas Barrier Layer

In a first preferred embodiment, the gas barrier layer is a multilayer gas barrier layer comprising a barrier substrate (e.g. a barrier substrate film) and a barrier material layer.

The barrier substrate preferably comprises polymer, more preferably a polyolefin such as polypropylene or polyethylene. Typical polyolefin films may be made of a majority of PE or PP e.g. HDPE. This is desirable for recycling, as the laminated packaging material typically contains other layers of PE or PP, and also for compatibility with adjacent layers of PE or PP without the need for tie layers of adhesive polymer as discussed below. EVOH (e.g. containing 30 to 40 mol% ethylene) may be used.

Alternative possible polymers are polyesters (e.g. polyethylene terephthalate, PET) and polyamide (PA). However, these may require the use of tie layers of adhesive polymer for compatibility with adjacent layers comprising polyolefin, as discussed below.

The polymer barrier substrate film may be unoriented, but is preferably mono-axially oriented (MO) or biaxially oriented (BO). Preferred barrier substrate film materials include MO polyethylene (MOPE), BO polyethylene (BOPE) and BO polypropylene (BOPP).

Suitably, the thickness of the barrier substrate is 10 to 30 µm, more preferably 15 to 25 µm, e.g. 20 µm.

The barrier substrate film may be a multilayer film, and may comprise core and skin layers.

Suitably, the barrier substrate film is provided with a relatively much thinner skin layer of a vinyl alcohol based polymer (such as EVOH or PVOH) or polyamide, which may also be oriented. The skin layer is preferably applied by co-extrusion with the core layer, but may alternatively be dispersion coated on the core layer. Such films are referred to as "high surface energy" (HSE) films as the skin layer enables good bonding of the barrier material layer. The skin layer also typically provides some oxygen gas barrier properties.

The barrier material layer is preferably vapour-deposited, dispersion-coated or liquid film-coated.

Thin vapour-deposited layers are normally merely nanometer-thick, i.e. have a thickness in the order of magnitude of nanometers, for example of from 1 to 500 nm (50 to 5000 Å), preferably from 1 to 200 nm, more preferably from 1 to 100 nm and most preferably from 1 to 50 nm.

In a preferred embodiment, the barrier material layer comprises metal, metal oxide, silicon oxide, amorphous carbon or diamond-like carbon (DLC), and is preferably vapour-deposited. Such barrier material layers typically provide barrier properties against both oxygen and water vapour. Preferred such barrier materials are aluminium, aluminium oxide and silicon oxide. The oxides may be non-stoichiometric.

Vapour-deposited metal layers (also referred to herein as "metallised layers") are preferred. Generally, oxide coatings are more brittle than metallised coatings and less suitable for incorporation into packaging materials by lamination. Metallised layers typically do have suitable mechanical properties for lamination, but generally provide a lower barrier to oxygen gas. A suitable optical density is at least 1.5, preferably at least 1.8.

The vapour-deposited barrier material layer is preferably applied by means of physical vapour deposition (PVD) or chemical vapour deposition (CVD), for example by plasma enhanced chemical vapour deposition (PECVD). PVD is typically used for metallised layers and is also applicable to metal oxide and silicon oxide layers. Normally, an aluminium metallised layer inherently has a thin surface portion consisting of an aluminium oxide due to the nature of the metallisation coating process used. Silicon oxide and DLC coatings may, for example, be applied by a PECVD process. Preferably, a hydrocarbon gas, such as e.g. acetylene or methane, is used as process gas in a plasma for producing a coating of DLC.

Preferred embodiments of the gas barrier layer are aluminium metallised BOPP (met-BOPP) and aluminium metallised oriented polyethylene (metOPE). A preferred gas barrier layer material is Metallyte 16MM883 from Jindal Films.

Where the gas barrier layer comprises a barrier substrate and a barrier material layer, it may be arranged in the laminated packaging material either with the barrier material layer directed towards the bulk layer (CFL, coating facing laminate) or with the barrier layer directed towards the innermost layer (CFI, coating facing inwards). CFL is preferred, particularly where the barrier substrate comprises polyolefin, for compatibility with the innermost layer. CFI is also possible, however, especially where the barrier substrate is of PE, which is expected to provide suitable adhesive strength to the releasable adhesive coating. Where CFI is used, a tie layer between the barrier material layer and innermost layer(s) (e.g. of EAA) may be preferred as discussed below.

In a second preferred embodiment, the gas barrier layer comprises a layer of gas barrier polymer e.g. PA or EVOH. This may be in the form of a pre-manufactured film, or a co-extruded layer together with a tie layer of suitable adhesive polymer as discussed below, preferably on both sides. A five-layer co-extruded inner layer structure such as PE layer/tie layer/EVOH or PA/tie/innermost layer is possible.

### Innermost Layer(s)

The innermost layer(s) of thermoplastic polymers do not normally add recognizable barrier properties to migrating gas molecules or small molecules. Their purpose is to provide a direct barrier to water or other liquids from penetrating through to the cellulose-based bulk material and other sensitive layers and to act as an aseptic barrier, maintaining package integrity to protect the filled contents inside the package, as well as preferably being heat sealable.

In addition, in the present invention, application of the innermost layer(s) is preferably used as a source of heat to bond the releasable adhesive coating to the barrier layer by heat pressure lamination as described in more detail below. The innermost layer is thus suitably applied by melt extrusion coating. However, the innermost layer(s) may alternatively be included in and form part of the pre-manufactured gas barrier layer, e.g. as a heat sealable layer or layers in a multilayer substrate film, which is coated with gas barrier coatings. In such a case, the lamination heat would be applied by using a hot cylinder to heat through the gas barrier layer, i.e. gas barrier film, to adhere it to the releasable adhesive coating. Suitable thermoplastics for the innermost layer(s) are polyolefins such as polyethylene and polypropylene homo- or co-polymers, preferably polyethylenes and more preferably polyethylenes selected from the group consisting of LDPE, LLDPE, m-LLDPE and blends or copolymers thereof. According to an embodiment, the innermost layer is a blend composition of m-LLDPE and LDPE (also referred to herein as "mPE") for optimal lamination and heat sealing properties. In a preferred embodiment, the innermost layer comprises 50 to 90 wt% mLLDPE and 10 to 50 wt% LDPE, for example 70 wt% mLLDPE and 30 wt% LDPE. However, lower proportions of mLLDPE such as 10 to 50 wt% e.g. 30 wt% in such blends are also envisaged. A suitable blended grade of mLLDPE and LDPE is Elite 5800G from Dow.The innermost layer may comprise two or more sub-layers which may be of different compositions, e.g. a sub-layer of m-LLDPE adjacent to an innermost layer of an m-LLDPE and LDPE blend. A sub-layer in this position may also be considered as a tie layer; tie layers are discussed further below.

The innermost layer(s) may be applied at thicknesses ranging from 15 to 50 µm, or 15 to 50 g/m², such as 15 to 45 g/m². An amount of at least 15 g/m² is preferred to supply sufficient heat for the heat pressure lamination of the gas barrier layer to the releasable adhesive coating.

### Other Layers of Laminated Packaging Material

The outermost layer of thermoplastic polymer also provides a barrier for water rather than migrating gas molecules, as described for the innermost layer(s) above.

The outermost layer may be a layer or coating of a protective polymer, to prevent dirt and moisture from reaching the interior of the laminated material, such as a polymer layer, such as a thermoplastic polymer layer. Preferably, this layer is liquid-tight.

Suitable thermoplastics for the outermost layer are generally as described above for the innermost layer(s). According to an embodiment, the outermost layer is of LDPE. A suitable LDPE grade is 19N730 from Ineos.

The outermost layer is preferably transparent. In this way, any printed décor pattern applied onto the outside of the bulk layer can be seen. This is useful in informing viewers e.g. about the contents of the package, the packaging brand and other consumer information relevant in retail facilities and/or food shops.

The outermost layer is typically applied at a thickness of from 5 to 20 µm, such as from 10 to 15 µm, or 5 to 15 g/m², such as from 8 to 15 g/m².

The outermost layer is preferably applied by extrusion coating.

In an alternative preferred embodiment, the outermost layer can be dispersion coated at a lower amount (e.g. 6 to 8 g/m² dry weight) to provide a coating which is protective rather than strongly liquid-tight. This assists recyclability by lowering the polymer content of the outer layers.

As mentioned above, a tie layer may be present in the interior of the laminated packaging material, in particular between the gas barrier layer and innermost layer. Such tie layers enable good bonding to adjacent layers of different nature, which would otherwise not be sufficiently compatible to bond well to each other. They may comprise adhesive thermoplastic polymers, such as modified polyolefins, which are mostly based on LDPE or LLDPE co-polymers or graft co-polymers with functional-group containing monomer units, such as carboxylic or glycidyl functional groups, e.g. (meth)acrylic acid monomers or maleic anhydride (MAH) monomers, (i.e. EAA or ethylene methacrylic acid copolymer (EMAA)), ethylene-glycidyl(meth)acrylate copolymer (EG(M)A) or MAH-grafted polyethylene (MAH-g-PE). Other examples of such modified polymers or adhesive polymers are so called ionomers or ionomer polymers. A preferred EEA tie layer material is Primacor 3540 from SK Group, Korea.

In particular, the innermost layer(s) may be bonded to the gas barrier layer via a tie layer e.g. of adhesive polymer such as ethylene acrylic acid copolymer (EAA), which is preferably co-extruded with the innermost layer(s). This is applicable especially to the second embodiment of the gas barrier layer (gas barrier polymer). However, as noted above, it may also be applicable to the first embodiment (multilayer gas barrier layer of barrier substrate and barrier material layer) where the material directed towards the innermost layer is not compatible with the innermost layer. For example, a tie layer of mLLDPE may be used to bond a barrier substrate of BOPP to the innermost layer, as discussed in WO2023/186448.

Tie layers are typically applied at a thickness of from 3 to 8 g/m².

### Method of Making Laminated Packaging Material

The method of making the delaminable laminated packaging material comprises lamination of the releasable adhesive coating of the bulk layer to the gas barrier layer by pressure-laminating while supplying heat to the interface of the laminating surfaces, and applying the outermost layer and innermost (if present) material layers.

Optionally, the method further comprises an initial step of coating the inner surface of the bulk layer (which may be uncoated, or may have a previous coating) with an aqueous dispersion or solution of polymer to form the dried releasable adhesive coating. A drying step may be carried out. A previous coating, may be applied (and dried) beneath the releasable adhesive coating, such as a clay-coat or other aqueous dispersion coating containing filler particles and/or an additional gas barrier coating, such as a water dispersible coating of polyvinyl alcohol or starch.

The method may further comprise a step of printing and/or creasing the bulk layer in addition to coating of its inner surface with the releasable adhesive coating, before heat pressure lamination of the releasable adhesive coating to the gas barrier layer.

The bulk layer is bonded to the gas barrier layer by heat pressure lamination. This is suitably carried out by melt extrusion lamination of the innermost layer(s) onto a web of the gas barrier layer which is adjacent on its opposite face to the coated face of a web of the bulk layer, and simultaneously pressing the three layers together while being forwarded through a lamination roller nip, thus providing a laminated structure. Alternatively, the innermost layer(s) may be pre-formed and included as part of the gas barrier layer (i.e. film), and heat pressure lamination may be carried out by applying heat and pressure e.g. by using a heated roller in a lamination roller nip.

Preferably, heat pressure lamination is conducted without surface treatment before laminating, such as corona or plasma or flame treatments. Such treatments increase adhesive strength.

The extrusion melt temperature of the melt curtain of the innermost layer material can be adjusted to achieve the desired level of adhesion between the releasable adhesive coating and the gas barrier layer. The preferred extrusion melt temperature range is related to the lamination speed, but is typically 250 to 300 °C, such as 250 to 280 °C, for example 260 °C.

The heat activation can thus be controlled by adjusting the extrusion melt temperature of the innermost layer material, during lamination.

In a preferred embodiment, the bulk layer, gas barrier layer and innermost layer(s) are laminated, followed by application of the outermost layer. Alternatively, the bulk layer may be initially joined to the outermost layer before lamination to the gas barrier layer and innermost layer(s).

### Packaging Container and Method of Making Packaging Container

The packaging container may be made from a web of the delaminable laminated packaging material or from blanks of the delaminable laminated packaging material, as discussed in more detail below; various possible shapes of container are indicated.

According to a further embodiment, the packaging container formed from the laminated packaging material may be partly sealed, filled with liquid or semi-liquid food and subsequently sealed, by sealing of the packaging material to itself, optionally in combination with a plastic opening or top part of the package. Ultrasonic heat sealing is preferred.

### Delamination

The delaminable laminated packaging material is preferably intended for delamination by hand by a consumer or recycling worker at the releasable adhesive coating to separate the outer layers (including the bulk layer) from the inner layers (including the gas barrier layer). Typically, delamination will be carried out on a packaging container after use, in preparation for recycling. The inner layers can be sent directly to the polymer/polyolefin recycling stream e.g. via a polymer recycling bin.

### Recycling of Laminated Packaging Material or Packaging Container

In a further embodiment, the invention relates to a method of recycling a delaminable laminated packaging material or a packaging container as described above, comprising repulping of the laminated packaging material or a portion thereof. Repulping of packaging containers typically takes more time to achieve a given fibre yield than repulping of flat laminated packaging material.

Repulping may be carried out only on the outer layers from the releasable adhesive coating outwards (including the bulk layer but not the gas barrier layer), following delamination, or on the full laminated packaging material also including the inner layers, with no initial delamination. Repulping of the outer layers only is preferred. Repulping may be carried without dry cutting (also referred to as shredding or comminution) of the laminated packaging material. This is particularly desirable for non-delaminated material e.g. packaging containers, to reduce fragmentation of the inner layers which may lead to this material being retained in the fibre pulp; reduced fragmentation of the outermost layer is also desirable for the same reason. Suitably, 15 wt% of dry packaging containers are mixed with water.

Alternatively, the laminated packaging material or outer layers thereof may be first dry cut into small pieces or strips.

The material to be repulped is suitably fed into a conventional pulper and mechanically processed by agitation in hot water at 40-600 °C. This releases and redisperses the layer of releasable adhesive coating, so that the fibres are separated from the inner layers, if present, without fibres adhering to and accompanying the plastic surface. The outermost layer will also separate from the fibres, although separation may be less complete because there is no releasable adhesive coating. The fibres and water form a pulp. The pulp can be physically separated from the inner layer (if present) and outermost layer "coarse reject" fraction.

In preferred embodiments, the fibre yield after 30 minutes of repulping is at least 97 wt%, more preferably at least 99 wt%. These fibre yields may be reached after 20 minutes, or after 15 or 10 minutes.

### Examples and description of preferred embodiments

In the following, preferred embodiments of the invention will be described with reference to the drawings, in which:
Fig. 1 schematically illustrates a cross-section of a delaminable laminated packaging material including a metallised multilayer gas barrier layer, according to a first embodiment of the present invention.
Figs. 2a-c schematically illustrate a method of producing the laminated packaging material of Fig. 1.
Fig. 3a-d show typical examples of liquid carton packaging containers produced from the laminated packaging materials of Fig. 1.
Fig. 4 shows the principle of how such liquid carton packaging containers are manufactured from the laminated packaging materials in a continuous, roll-fed, form, fill and seal process.
Fig. 5 shows an alternative to the step of Fig. 2b for melt extrusion lamination.
Fig. 6 schematically illustrates delamination of the laminated packaging material of Fig. 1 by a consumer.

### Example

An example delaminable laminated packaging material was prepared with the structure of outermost layer / bulk layer / releasable adhesive coating / gas barrier layer / innermost layers.

The example had the following structure:
12 gsm LDPE / paperboard / 1 gsm EVAc coated on paperboard / Metallyte 16MM883 / 6 gsm mLLDPE / 19 gsm blend of 70 wt% mLLDPE and 30 wt% LDPE

The paperboard bulk layer was CLC/C Duplex paperboard BK from Billerud, Sweden of bending stiffness 80 mN and basis weight 200 g/m², clay-coated on the outer surface only and with an uncoated fibrous inner surface.

The EVAc in the releasable adhesive coating was Aquence BG9031 from Henkel, Germany (ready mixed aqueous emulsion with 55 wt% solids content).

The gas barrier layer of Metallyte 16MM883 was a BOPP film having a metallised coating (thickness 16 µm, optical density 2.8) from Jindal Films.

The LDPE in the outermost layer was 19N730 from Ineos.

A suitable grade of mLLDPE for the outer sub-layer of the innermost layer (which can also be considered as a tie layer) is Elite 5860 from Dow.

The mPE blend in the inner sub-layer of the innermost layer (the product-contacting layer) was Elite 5800G from Dow.

The laminated packaging material was formed as follows.

The EVAc emulsion was dispersion coated on the non-clay coated fibrous inner surface of the paperboard, dried with a hot air convection dryer and wound onto a reel.

The EVAc-coated paperboard web was unwound, printed on its outer surface and provided with creasing lines for subsequent folding in register with the thus printed décor, and again wound onto a reel.

The EVAc-coated paperboard was heat pressure laminated to the gas barrier layer by co-extruding the innermost layers onto the gas barrier layer BOPP substrate at a melt curtain temperature of about 260 °C at 100 m/min. The outermost layer was then extruded onto the outer surface of the paperboard.

The gas barrier layer is oriented CFL i.e. with the metallised coating directed towards the paperboard bulk layer and the BOPP film directed towards the innermost layers.

The laminated packaging materials of the example and variants thereof were tested using different releasable adhesive coating amounts (0.5 - 2 gsm EVAc), and different extrusion melt temperatures for the innermost layers. Adhesive strength ("adhesion") was tested. The results are shown in Table 1.

**Table 1**

| **Sample** | **Adhesive** | **Speed** | **Corona treating** | **Inside temperature (melt temp)** | **Adhesion** | **Comment** |
|---|---|---|---|---|---|---|
| **#** | **gsm +/-0.5** | **m/min** | **on/off** | **°C** | **N/m +/-10%** | **Low/Good/ High** |
| 1 | 0.5 | 100 | off | 260 | 10 | Low |
| 2 | 1 | 100 | off | 260 | 16 | Good |
| 3 | 2 | 100 | off | 260 | 51 | High |
| 4 | 1 | 100 | off | 300 | 44 | High |
| 5 | 2 | 100 | off | 300 | 62 | High |

"Low adhesion" means delamination in the intended layer, but risk for
premature delamination.

"Good adhesion" means delamination in the intended layer; easily delaminable by hand.

"High adhesion" means delamination partly or fully in the wrong layer (typically within the bulk layer).

Thus, good delamination results were achieved with 1 gsm releasable adhesive coating.

Adhesion increased with extrusion melt temperature of the innermost layers. Thus, low temperature melt extrusion lamination at a temperature of 260 °C provided the best delamination results for a speed of 100 m/min; high temperature melt extrusion lamination at 300 °C did not provide acceptable delamination because adhesion was too high.

When the laminated packaging material is delaminated by hand, no fibre is expected to be observed on the inner layers.

Repulping tests can be carried out on the laminated and delaminated packaging material in a Kadant Auto Lab Pulper which mimics commercial batch pulpers for used beverage cartons. 9 % dry content in water is used at a temperature of 43 °C. The material is cut prior to repulping into pieces of dimensions 5 x 5 cm. The pulp is passed through a bottom plate with holes of 10 mm diameter, with coarse reject being retained.

The laminates are repulped for 30 minutes. The inner layers, where present, are expected to separate from the outer layers to form a polymer - aluminium fraction. EVAc is redispersed in the water. The outermost layer of LDPE separates from the bulk layer.

To determine the fibre yield, 25 pieces of laminated packaging material of dimensions 5 x 5 cm are treated and samples taken at regular intervals until close to 100 % fibre yield is achieved. For example, samples can be taken at 10, 15 and 20 minutes, the material mix handwashed and the fibre content calculated based on the known weight of the polymer standard pieces (taking account also of small fibres lost from the recycling fibre stream in the washing liquid, caught as shives in a Somerville sieve).

Fibre yield is tested against a threshold of 97% yield, and this is expected to be achieved after 15 minutes for the full laminated packaging material. It is expected that the fibre yield after 20 minutes for packaging containers would also reach the threshold of 97 %.

The delaminated outer layers are expected to repulp faster than the full laminated packaging material. The polymer fraction (inner layers) is expected to contain less than 1 wt% fibre and the outermost LDPE layer is expected to contain less than 2 wt% fibre. No increase in fragmentation of the polymer fraction is expected compared with the initial pieces.

Further, relating to the attached figures:

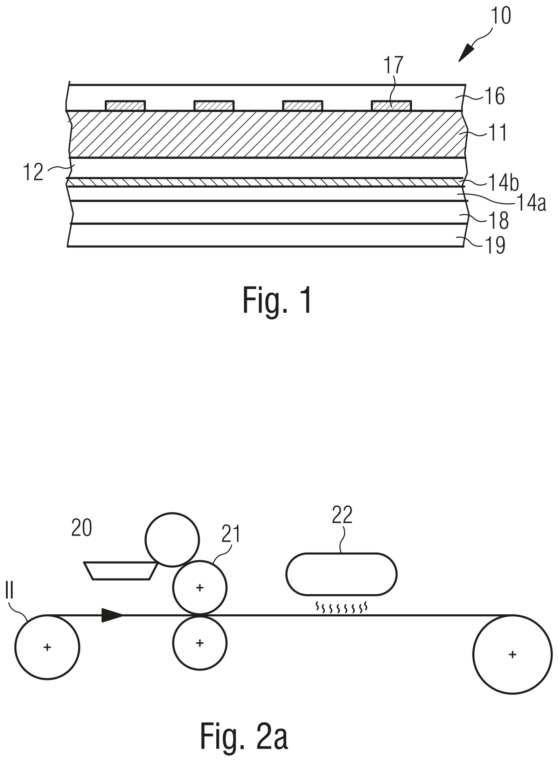

In Fig. 1, a laminated packaging material 10 for liquid carton packaging is shown in cross-section, in which the laminated packaging material comprises a paperboard bulk layer 11, having a bending force of 80 mN and a grammage weight of about 200 g/m². The bulk layer 11 is clay-coated on its outer surface and has an uncoated fibrous inner surface. The laminated packaging material 10 further comprises an outer liquid-tight and heat-sealable layer 16 of polyolefin applied on the outside of the bulk layer 11, which side is to be directed towards the outside of a packaging container produced from the laminated packaging material. The layer 16 is transparent to show the printed décor pattern 17, applied onto the outside of the bulk layer of paperboard.

The polyolefin of the outer layer 16 is a conventional low density polyethylene (LDPE) of a heat sealable quality, but could also include further similar polymers, including LLDPEs. It is applied at an amount of about 12 g/m².

The bulk layer 11 is coated on its fibrous inner surface with a dispersion-coated releasable adhesive coating 12 of ethylene-vinyl acetate copolymer. The releasable adhesive coating 12 is applied at an amount of about 1 g/m² (dry weight).

The releasable adhesive coating 12 is adhered to a barrier layer 14.

The barrier layer 14 on its inner side is adhered to a co-extruded tie layer (bonding layer) 18 and an innermost layer 19.

Tie layer 18 comprises 6 g/m² mLLDPE.

The innermost liquid-tight and heat-sealable layer 19 is arranged to be directed towards the inside of a packaging container produced from the laminated packaging material, i.e. the layer 19 will be in direct contact with the packaged product. This innermost layer 19, which is to form strong transversal heat seals of a liquid packaging container made from the laminated packaging material, comprises a blend of LDPE and m-LLDPE. It is applied at an amount of about 19 g/m².

The gas barrier layer 14 is a multilayer gas barrier layer comprising a barrier substrate film 14a of biaxially-oriented polypropylene vacuum-deposition coated with an aluminium barrier material layer 14b. The barrier substrate film 14a is directed towards the innermost layers (CFL).

Fig. 2a shows a part of the process for manufacturing of the laminated packaging material 10 of Fig. 1, in which the bulk layer 11 is dispersion coated with the releasable adhesive coating 12. This step may be conducted at a paperboard supplier's site. A web 11 of paper or paperboard is led in the direction of the arrow from a magazine reel to the left in Fig. 2a to a dispersion coating station at 20 at which one side of the web 11 is, using conventional roller coating apparatus 21, coated with a thin layer of an aqueous emulsion of ethylene-vinyl acetate copolymer having a solids content of 55 %.

Since the dispersion composition has a high aqueous content, there will be a lot of water on the coated bulk layer web 11 that needs to be dried by heat, and evaporated off, to form a continuous layer. The drying is carried out by a hot air convection dryer 22, which allows the moisture to evaporate and be removed from the substrate surface by air convection. The substrate temperature as it travels through the dryer is kept constant at a temperature of from 60 to 80 °C. Alternatively, particularly at high speeds, drying may be partly assisted by irradiation heat from infrared IR-lamps, in combination with hot air convection drying.

Optionally, the coated bulk layer web 11 may enter a conversion line for printing and/or creasing (these steps are not shown).

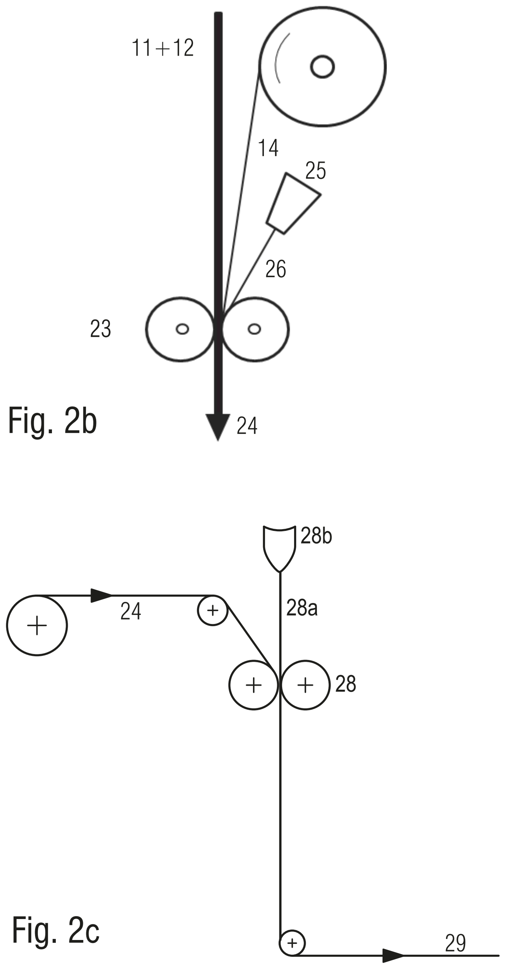

Fig. 2b shows a further part of the process for the lamination steps in the manufacturing of the laminated packaging material 10 of Fig. 1, in which the coated bulk layer 11 is laminated to the gas barrier layer 14.

The releasable adhesive coating 12 of the bulk layer 11 is heat pressure laminated to the gas barrier layer 14. Heat is supplied by melt co-extrusion of a thin polymer melt curtain 26 of the tie layer 18 and innermost layer 19 from a die 25 onto the barrier substrate film 14a of a web of the gas barrier layer 14. The barrier material 14b is adjacent to the releasable adhesive coating 12 of a web of the bulk layer 11. All three layers pass through a nip 23 between a press roller and a chilled roller, cooling the laminated material 24 on the opposite side of the bulk layer. The melt extrusion temperature of the tie layer and the innermost layer is about 260 °C, at a web speed of about 100 m/min.

The resulting pre-laminate 24 is forwarded to be wound up on a reel for intermediate storage, or directly to subsequent lamination operations.

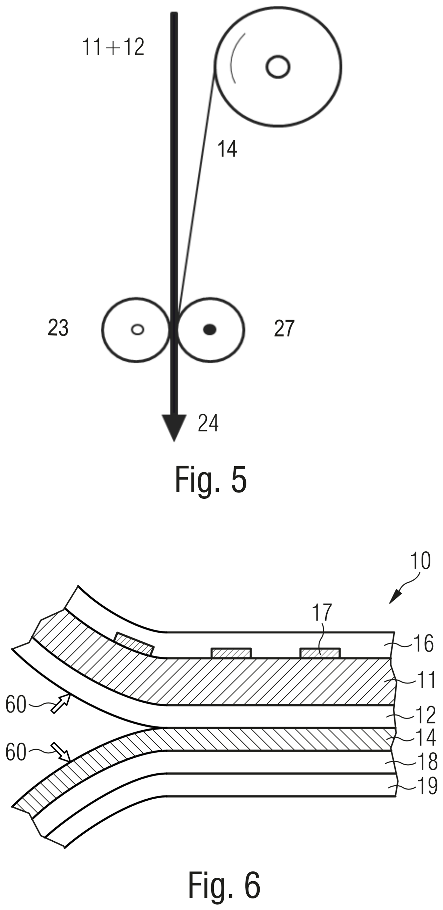

Fig. 5 shows an alternative step to Fig. 2b in which the innermost layer 19 is comprised in the barrier substrate film 14a, and a heated roller 27 at nip 23 provides the heat for heat pressure lamination of the gas barrier layer 14 to the releasable adhesive coating 12 of the bulk layer 11

In Fig. 2c, the resulting web of pre-laminate 24 of bulk layer 11, gas barrier layer 14 and innermost layers 18, 19 is forwarded to further lamination steps, either directly from the lamination operation of Fig. 2b, or from engaging and unwinding from an intermediate storage reel.

The pre-laminate 24 passes an extruder feedblock and die 28b and a lamination nip 28, where a molten polymer curtain 28a of the LDPE which is to form the outermost layer 16 of the laminated packaging material 10 is joined and coated onto the non-laminated print side of the bulk layer 11. This forms the finished laminated packaging material 29; 10, which is finally wound onto a storage reel (not shown). The step of applying outermost layer 16 may alternatively be performed before lamination of the webs at lamination roller nip 23 as shown in Fig. 2b.

The bulk layer 11 may be provided with holes (not shown) which are overlaminated by the other layers of the laminated packaging material 10 to form pre-laminated holes.

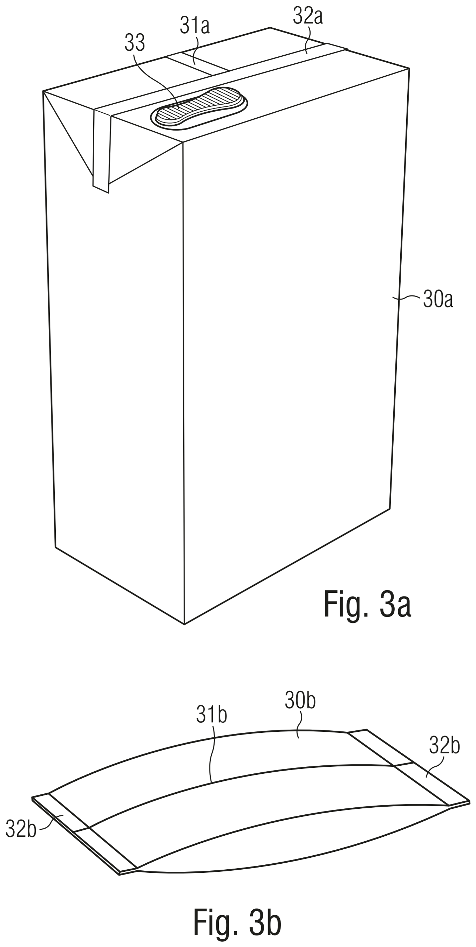

Fig. 3a shows an embodiment of a packaging container 30a produced from a laminated packaging material 10 according to the invention. The packaging container is particularly suitable for beverages, sauces, soups or the like. Typically, such a package has a volume of about 100 to 1000 mL. It may be of any configuration, but is preferably brick-shaped, having longitudinal and transversal seals 31a and 32a, respectively, and optionally an opening device 33 over a pre-laminated hole (not shown). In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

Fig. 3b shows an alternative example of a packaging container 30b produced from an alternative laminated packaging material 10 according to the invention. The alternative laminated packaging material is thinner by having a thinner paper bulk layer, and thus it is not dimensionally stable enough to form a parallellepipedic or wedge-shaped packaging container, and is not fold formed after transversal sealing 32b. The packaging container will remain a pillow-shaped pouch-like container and be distributed and sold in this form.

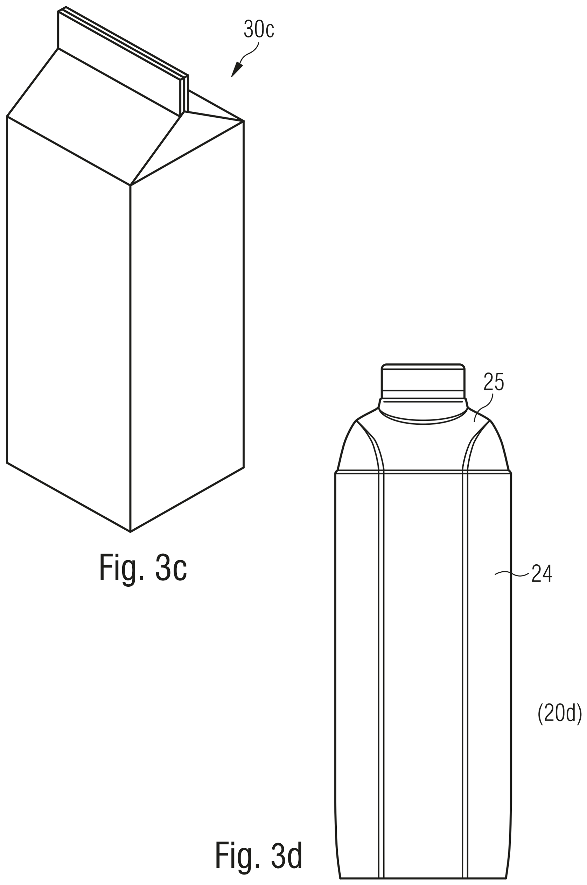

Fig. 3c shows a gable top package 30c, which is fold-formed from a pre-cut sheet or blank, from the laminated packaging material 10. Optionally an opening device and/or a pre-laminated hole (not shown) may be present. Also flat top packages may be formed from similar blanks of material.

Fig. 3d shows a bottle-like package 30d, which is a combination of a sleeve 34 formed from a pre-cut blank of the laminated packaging material 10 of the invention, and a top 35, which is formed by injection moulding plastics in combination with an opening device such as a screw cork or the like. This type of package is for example marketed under the trade name of Tetra Top^{®}. Those particular packages are formed by attaching the moulded top 35 with an opening device attached in a closed position, to a tubular sleeve 34 of the laminated packaging material, sterilizing the thus formed bottle-top capsule, filling it with the food product and finally fold-forming the bottom of the package and sealing it.

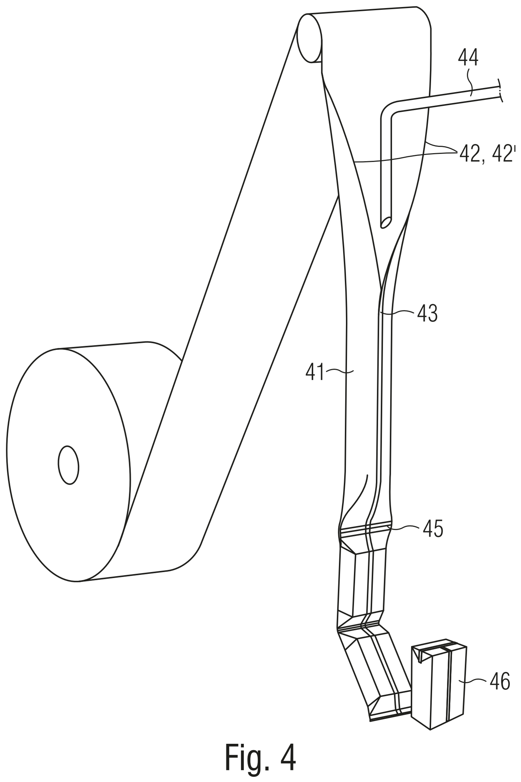

Fig. 4 shows the principle as described in the introduction of the present application, i.e. a web of packaging material is formed into a tube 41 by overlapping the longitudinal edges 42, 42' of the web and heat sealing them to one another, to thus form an overlap joint 43. The tube is continuously filled 44 with the liquid food product to be filled and is divided into individual, filled packages by repeated, double transversal seals 45 of the tube at a predetermined distance from one another below the level of the filled contents in the tube. The packages 46 are separated by cutting between the double transversal seals (top seal and bottom seal) and are finally shaped into the desired geometric configuration by fold formation along prepared crease lines in the material.

After use, the material in the packages may, in a simple manner and employing available techniques and equipment, readily be separated into its individual components, and in very pure form be recycled and re-used.

The inner layers (polymer-based) and outer layers (fibre-based) of the laminated packaging material of a packaging container may be delaminated by the consumer after use, or at the appropriate time, when discarding and sorting the packaging container for recycling. Suitably, the outer layers go to UBC (used beverage carton) carton recycling and the inside layers are put in the polymer recycling bin by the consumer. Fig. 6 shows separation of the laminated packaging material of Fig. 1 between the releasable adhesive coating layer 12 and gas barrier layer 14 when peeled apart by hand. The outwards peeling force applied by the consumer's thumbs to separate the layers is shown schematically at 60.

However, it is possible for the full laminated packaging material to be recycled. The fibre content of the packaging container (the paper or paperboard in the bulk layer of the laminated packaging material) may especially be recycled and be re-used in extremely pure form, using a repulper as described in the examples.

In the preferred embodiments, various advantages are achieved:
- Direct adhesion of the releasable adhesive coating to the gas barrier layer without an intermediate polymer bonding layer reduces the amount of polymer used in the packaging material.
- Faster repulping is achieved with the full laminated packaging material than with conventional laminated packaging materials which do not include the releasable adhesive coating, as the coating is released to expose the fibrous inner surface of the bulk material.
- This is improved further when the laminated packaging material is delaminated i.e. separated into layer parts of the full laminate before recycling with repulping is carried out on the outer layers only, as the fibrous inner surface of the bulk material is initially exposed. The inner layers go directly to the polymer/polyolefin recycling stream, saving time, energy and water in the repulping step.
- Good purity of recycled materials is achieved for the delaminated fibre fraction and the polymer fraction
- Fragmentation of the inner layers and outermost layer is avoided during repulping of the full laminated packaging material. Small fragments are undesirable as they may remain in the fibre pulp.
- Where a polyethylene-based barrier substrate is used and this is directed towards the innermost layers (CFL), the use of tie layers of adhesive polymer can be avoided in the laminated packaging material, and the barrier substrate can be recycled with the PE innermost layer of the delaminated inner layer portion, to a high-purity recycling stream of PE polymer.
- Packaging containers can be formed using conventional filling machine settings.

As a final remark, the invention is not limited by the embodiments shown and described above, but may be varied within the scope of the claims.

### List of reference numerals:

10 delaminable laminated packaging material
11 bulk layer
12 releasable adhesive coating
14 barrier layer
14a barrier substrate film
14b barrier material layer
16 outermost layer
18 tie layer
19 innermost layer
20 coating station
21 coating apparatus
22 hot air dryer
23 nip
24 laminated material
25 die
26 molten polymer curtain
27 heated roller
28 nip
28a molten polymer curtain
28b die
29 laminated packaging material
30a packaging container
30b pouch container
30c gable top package
30d bottle like package
31a longitudinal seal
31b longitudinal seal
32a transversal seal
32b transversal seal
33 opening device
34 sleeve
35 top
41 tube
42, 42' edges of web
43 overlap joint
44 filling of tube
45 double transversal seal
46 packages
60 peeling force

## Claims

1. A delaminable laminated packaging material (10) for packaging of liquid or semi-liquid food products, comprising as layers of a layer sequence:
- an outermost protective material layer (16);
- a bulk layer (11) of paper or paperboard or other cellulose-based material;
- a releasable adhesive coating (12) comprising a water-dispersible polymer selected from ethylene-vinyl acetate copolymer, acrylic copolymer, styrene-butadiene copolymer and ethylene-vinyl alcohol copolymer coated onto the inner surface of the bulk layer (11);
- a gas barrier layer (14) comprising a barrier substrate (14a) and a barrier material layer (14b), or comprising a gas barrier polymer, the gas barrier layer being bonded to the releasable adhesive coating (12); and
- an innermost liquid-tight material layer (19), which is optionally comprised in the barrier substrate (14a).

2. A delaminable laminated packaging material (10) as claimed in Claim 1, wherein the adhesive strength of the releasable adhesive coating (12) to the gas barrier layer (13) is 10 to 30 N/m.

3. A delaminable laminated packaging material (10) as claimed in Claim 1 or Claim 2, wherein the water-dispersible polymer is ethylene-vinyl acetate copolymer.

4. A delaminable laminated packaging material (10) as claimed in any one of the preceding claims, wherein the releasable adhesive coating (12) is present in an amount of 0.5 to 3 g/m², such as 1 to 3 g/m².

5. A delaminable laminated packaging material (10) as claimed in any one of the preceding claims, wherein the gas barrier layer (14) comprises a barrier substrate (14a) and a barrier material layer (14b) and the adhesive strength of the releasable adhesive coating (12) to the gas barrier layer (14) is preferably 15 to 20 N/m.

6. A delaminable laminated packaging material (10) as claimed in any one of the preceding claims, wherein the barrier material layer (14b) comprises metal, metal oxide or silicon oxide.

7. A delaminable laminated packaging material (10) as claimed in any one of the preceding claims, wherein the barrier substrate (14a) comprises oriented polyolefin, preferably oriented polyethylene or oriented polypropylene, optionally provided with a skin layer of vinyl alcohol polymer or polyamide.

8. A delaminable laminated packaging material (10) as claimed in any one of the preceding claims, wherein the gas barrier layer (14) is arranged with the barrier material layer (14b) directed towards the bulk layer (11) and the barrier substrate (14a) directed towards the innermost layer.

9. A delaminable laminated packaging material (10) as claimed in any one of Claims 1 to 4, wherein the gas barrier layer (14) comprises a layer of gas barrier polymer selected from polyamide and ethylene-vinyl alcohol co-polymer.

10. A method of making a delaminable laminated packaging material (10) as claimed in any one of the preceding claims;
comprising the steps of:
- laminating the releasable adhesive coating (12) of the bulk layer (11) to the gas barrier layer (14) by means of heat pressure lamination; and
- applying the outermost (16) and optionally innermost (19) layers.

11. A method as claimed in Claim 10, wherein the innermost layer (19) is applied by melt extrusion so as to provide heat for the step of heat pressure lamination of the releasable adhesive coating (12) of the bulk layer (11) to the gas barrier layer (14).

12. A method as claimed in Claim 10 or Claim 11, further comprising an initial step of coating the inner surface of the bulk layer (11) with an aqueous dispersion or solution comprising the water-dispersible polymer to form the dried releasable adhesive coating (12).

13. A method as claimed in any one of Claims 10 to 12, further comprising a step of printing and/or creasing the bulk layer (11) before or after coating of the inner surface of the bulk layer (11) with the releasable adhesive coating (12), and before lamination of the releasable adhesive coating (12) to the gas barrier layer (14).

14. A method as claimed in any one of Claims 11 to 13, wherein the lamination of the releasable adhesive coating (12) of the bulk layer (11) to the gas barrier layer (14) is conducted with an innermost layer (19) material melt extrusion temperature of 250 to 280 °C.

15. A packaging container (30a; 30b; 30c; 30d) comprising the delaminable laminated packaging material (10) as defined in any one of Claims 1 to 9.

16. A method of making a packaging container (30a; 30b; 30c; 30d) as claimed in Claim 15 from a web of the delaminable laminated packaging material (10) or from blanks of the delaminable laminated packaging material (10).

17. A method of recycling a packaging container (30a; 30b; 30c; 30d) as claimed in Claim 15 or a laminated packaging material (10) as claimed in any one of Claims 1 to 9, comprising repulping of the laminated packaging material (10), or a portion thereof.

18. A method as claimed in Claim 17, wherein repulping is carried out on the outer layers of the delaminated laminated packaging material (10) following delamination from the inner layers at the releasable adhesive coating (12).
